# EUROPÄISCHE PATENTSCHRIFT

(11) **EP 0 998 968 B1**
(45) Veröffentlichungstag und Bekanntmachung des Hinweises auf die Patenterteilung: **14.06.2006**
(21) Anmeldenummer: 99118832.7
(22) Anmeldetag: 24.09.1999
(51) Int. Cl.: B01D 33/04, B01D 37/02

(54) **Verfahren zur Reinigung von Prozesswässern**
Process for treating industrial effluents
Procédé de traitment des effluents industriels

(30) Priorität: 06.11.1998 AT 184998
(43) Veröffentlichungstag der Anmeldung: 10.05.2000
(73) Patentinhaber: Voest Alpine Industrieanlagenbau GmbH, 4020 Linz (AT)
(72) Erfinder: Zobernig, Andreas, Dipl.-Ing., 4060 Leonding (AT)
(74) Vertreter: VA TECH Patente GmbH & Co

(56) Entgegenhaltungen:
- WO-A-91/12210
- DE-A- 19 520 651
- US-A- 3 844 943
- US-A- 3 870 632
- US-A- 4 004 918

## Beschreibung

Die Erfindung betrifft ein Verfahren zur Reinigung von verunreinigten Prozesswässern aus Anlagen zur Eisen- und/oder Stahlherstellung und -bearbeitung, beispielsweise aus Walzwerken oder Entzunderungsanlagen, wobei die Verunreinigungen von Zunder, Ölen, Fetten, sowie gegebenenfalls Ruß und/oder Staub gebildet werden, wobei die verunreinigten Prozesswässer zunächst in einer Grobabscheidung von Grobzunder und eines Teils der Öle/Fette gereinigt werden, anschließend in mindestens einer weiteren Reinigungsstufe endgereinigt und schließlich nach einem Kühlschritt wieder in den/die Eisen und/oder Stahl herstellenden bzw. bearbeitenden Prozess(e) zurückgeführt werden.

In der Eisen- und Stahlerzeugung wird Wasser für Kühlzwecke und zur Reinigung eingesetzt. In den Direktkühlsystemen kommt es zu einem direkten Kontakt des Wassers mit dem Produkt, und damit neben einer Erwärmung auch zu einer Verschmutzung des Kühlwassers. Die Art der Verschmutzung wird durch den jeweiligen Prozeß vorgegeben, meist handelt es sich um Zunder, Öle, Fette, Ruß, Staub usw.

Gegenüber früher ist heute eine Wiederverwendung des Kühlwassers, das heißt eine Kreislauffahrweise die übliche Vorgehensweise. Vor einer Wiederverwendung muß das erwärmte und verschmutzte Kühlwasser gereinigt und rückgekühlt werden. Dies geschieht in Wasseraufbereitungsanlagen, die einerseits die Schmutzstoffe abscheiden, und anderseits die Wärme an die Umgebung transferieren.

Die verunreinigten Prozesswässer werden zunächst in einem Zunderbrunnen von Grobzunder, sowie eines Teils der Öle/Fette-jeweills aufgrund von Dichteunterschieden - gereinigt. Der abgeschiedene Grobzunder kann in der Regel wieder eingesetzt werden, die an der Oberfläche des Zunderbrunnens abgeschiedenen Öle/Fette müssen üblicherweise entsorgt werden.

Die weitere Reinigung erfolgt in Längsklärern, also Wasserbecken mit beispielsweise bis zu 50 m Länge. Dort erfolgt die Abscheidung eines weiteren Teils des Zunders, sowie der Öle und Fette, wiederum aufgrund von Dichteunterschieden. In der Regel ist ein Wiedereinsatz des hier abgeschiedenen Zunders und der Öle und Fette nicht möglich.

Die Endreinigung wird schließlich in Sandfiltem durchgeführt, wo der überwiegende verbleibende Anteil des Feinzunders und der Öle und Fette durch Tiefenfiltration abgetrennt wird. Das in dieser Stufe abgeschiedenen Zunder/Öl/Fett - Gemisch wird in einer Schlammaufbereitung weiterbehandelt.

Die Abfallprodukte der Wasserreinigung wie z. B. Zunderschlamm können auf Grund des Öl/Fettanteiles nur bedingt im Prozeß wieder eingesetzt werden; der übrigbleibende Teil stellt ein wesentliches umweltrelevantes Problem dar und muß üblicherweise deponiert werden.

Die bekannten Verfahren zur Prozesswasserreinigung und Schlammaufbereitung, wie z.B. in der US 3,844,943 geoffenbart, sind nur mit hohen Investitions-, Betriebs- und Deponiekosten zu realisieren. Darüber hinaus ist der Platzbedarf der erwähnten Anlagen enorm. Aus der US 3,870,632 ist die Verwendung von Bandfiltern bei der Reinigung von kommunalem Abwasser zu entnehmen, wobei das abgeschiedene Material jedoch verbrannt wird. Nachteilig ist dabei ein hoher Energieaufwand und eine aufwändige

Nachbehandlung.

Die der Erfindung zugrundeliegende Aufgabe ist es daher, ein Verfahren der eingangs genannten Art zu schaffen, welches die aus dem Stand der Technik bekannten Nachteile vermeidet. Insbesondere soll das erfindungsgemäße Verfahren es ermöglichen, Prozesswässer im Kreislauf zu führen und dabei Investitions- und Betriebskosten bei der Wasseraufbereitung einzusparen. Weiters sollen die aus den Prozesswässern abgeschiedenen Verunreinigungen einer leichten Weiterverwertung zugänglich sein.

Die erfindungsgemäß gestellte Aufgabe wird dadurch gelöst, daß die verunreinigten Prozesswässer nach der Grobabscheidung einer Bandfiltration unterzogen werden und dabei eine Schicht aus feinkörnigem Filterhilfsmaterial durchströmen, wobei die Verunreinigungen abgeschieden werden und das Filterhilfsmaterial und/oder die darauf abgeschiedenen Verunreinigungen einer Weiterverwertung zugeführt werden.

Durch die Verwendung der Bandfiltration mit Filterhilfsmaterial ist es möglich, teure Anlagenteile, wie beispielsweise Längsklärer und Sandfilter, wegzulassen. Darüberhinaus ermöglicht die Verwendung eines Bandfilters eine flexiblere Fahrweise, da mit der Bandgeschwindigkeit die Filtrationsleistung gesteuert werden kann.

Bevorzugterweise wird das erfindungsgemäße Verfahren so durchgeführt, daß feinkörniges Filterhilfsmaterial kontinuierlich auf ein Bandfilter aufgegeben wird und dabei eine Schicht mit einer Dicke von 5 bis 40 cm, vorzugsweise von 5 bis 20 cm, bildet und die verunreinigten Prozesswässer von oben auf das Filterhilfsmaterial aufgegeben werden.

Die Schichtdicke des Filterhilfsmaterials ist jedenfalls so zu bemessen, daß die gewünschte Wasserqualität erreicht wird und der Filtrationswiderstand nicht zu hoch ist. Gegebenenfalls kann, wie oben angeführt, die Filtrationsleistung durch erhöhte Bandgeschwindigkeit gesteigert werden.

Gegebenenfalls können den Prozesswässern vor der Filtration Flockungshilfsmittel zugesetzt werden.

Bevor das mit Verunreinigungen beladene Filterhilfsmaterial vom Bandfilter abgeworfen wird, wird es vorteilhafterweise mittels eines Gases, vorzugsweise Druckluft, getrocknet.

Es handelt sich dabei in erster Linie um eine "mechanische" Trocknung, das Filterhilfsmaterial wird dabei also nicht bzw. nur unwesentlich erwärmt.

Das feinkörnige Filterhilfsmaterial kann in vorteilhafter Weise zumindest teilweise von Sand und/oder Kies, vorzugsweise Quarzsand, gebildet werden.

Die Verwendung von Sand bzw. Kies als Filterhilfsmaterial bietet sich aufgrund dessen leichter und kostengünstiger Verfügbarkeit an.

Bei den heute üblichen Sandfiltern wird Sand mit einer Korngröße von 1 bis 3 mm verwendet. Das erfindungsgemäße Verfahren hat aber gezeigt, daß es möglich und vorteilhaft ist, Sand bzw. Kies mit einem wesentlich breiteren bzw. höheren Korngrößenbereich einzusetzen.

Eine vorteilhafte Ausführungsform des erfindungsgemäßen Verfahrens besteht daher darin, daß der Korngrößenanteil des Sandes bzw. Kieses von 1 bis 8 mm, vorzugsweise von 3 bis 6 mm, zumindest 90 % beträgt.

Gemäß einer vorteilhaften Ausführungsform des erfindungsgemäßen Verfahrens wird der mit den Verunreinigungen beladene Sand bzw. Kies vom Bandfilter abgeworfen, einer Regeneration unterzogen und als Filterhilfsmaterial in den Filtrationsprozeß rückgeführt.

Die Regeneration des Sandes bzw. Kieses erfolgt dabei in einer eigenen Rückspülvorrichtung, ähnlich einem bekannten Sandfilter, allerdings liegen die Verunreinigungen, also das Zunder/Öl/Fett - Gemisch in wesentlich konzentrierterer Form vor, als dies bei bekannten Verfahren nach der Endreinigung der Fall ist. Daraus ergeben sich beträchtliche Einsparungen bei der nachfolgenden Schlamm- und Wasseraufbereitung.

In einem Hüttenwerk und daran angeschlossenen Eisen und Stahl verarbeitenden Anlagen fallen zum einen bei der Aufbereitung der Einsatzstoffe beträchtliche Mengen von Feinanteilen, etwa Feinerz, Feinkohle und Kalk an. Diese feinteilchenförmigen Einsatzstoffe können nicht direkt in das jeweilige Verfahren, beispielsweise Hochöfen Konverter, Direktreduktionsöfen, Einschmelzvergaser, Elektroöfen, etc. eingesetzt werden, da dafür stückige Einsatzstoffe erforderlich sind.

Weiters fallen bei der Abgasreinigung in Hüttenwerken und daran angeschlossenen Eisen und Stahl verarbeitenden Anlagen große Mengen an Filterstäuben an, welche ebenfalls in der Form, in der sei anfallen, nicht wieder eingesetzt werden können und welche bislang zu einem großen Teil deponiert werden müssen.

Es ist daher eine weitere Aufgabe der Erfindung, in Hüttenwerken und daran angeschlossenen Eisen und Stahl verarbeitenden Anlagen anfallende Feinanteile von Einsatzstoffen, sowie bei der Gasreinigung in Hüttenwerken und angeschlossenen Anlagen anfallende Stäube wiederum für ein Verfahren zur Eisen- und/oder Stahlherstellung einsetzbar zu machen und es gleichzeitig unter Einsparung von Investitions- und Betriebskosten bei der Aufbereitung von Prozesswässern zu ermöglichen, daß diese Prozesswässer im Kreislauf geführt werden.

Diese weitere Aufgabe wird erfindungsgemäß dadurch gelöst, daß das feinkörnige Filterhilfsmaterial a) zumindest teilweise von einem Granulat aus Einsatzstoffen für die Eisen- und/oder Stahlherstellung, insbesondere granuliertem Feineisenerz, granuliertem Kalk, granulierter Feinkohle oder granulierten Mischungen davon, und/oder b) zumindest teilweise von einem Granulat aus bei der Eisen- und/oder Stahlherstellung anfallenden Stäuben, insbesondere Staub wie er bei der Gasreinigung an Elektroöfen, Konvertern, Hochöfen, Einschmelzvergasern und Direktreduktionsöfen anfällt, gebildet wird.

Mit dieser Ausführungsform des erfindungsgemäße Verfahrens ist es möglich, an der Prozesswasser- und Schlammaufbereitung noch weitere Einsparungen vorzunehmen. Es entfällt dabei nicht nur der Einsatz von Längsklärern und Sandfiltern, es kann unter Umständen sogar die gesamte Schlammbehandlung unterbleiben, da die Schlamminhaltsstoffe, also im wesentlichen Zunder, Öle und Fette, vom Filterhilfsmaterial gebunden werden.

Nach einer vorteilhaften Ausführungsform wird zur Herstellung der Granulate Bindemittel, beispielsweise, beispielsweise Branntkalk, Aluminium-Silikate oder Zement, in ausreichender Menge zur Erzielung der für den Filtrationsprozeß erforderlichen Stabilität der Granulate zugesetzt.

Um zu verhindern, daß die Granulate während des Filtrationsprozesses Wasser aufnehmen, ist es von Vorteil, wenn die Granulate wasserabstoßend ausgebildet werden und zwar durch Zusatz von Hydrophobierungsmittel(n), beispielsweise Fettsäureverbindungen, insbesondere Fettsäureester, beispielsweise Stearate, oder in der Grobabscheidung abgeschiedene Öle und Fette, vor und/oder während der Granulation.

Nach einem weiteren vorteilhaften Merkmal des erfindungsgemäßen Verfahrens, wobei zumindest ein Teil der Einsatzmaterialien zur Herstellung der Granulate von eisenhaltigen Stäuben gebildet wird, werden die Granulate - vor ihrem Einsatz als Filterhilfsmaterial - magnetisiert.

Eisenhaltige Stäube fallen in einem Hüttenwerk an vielen Stellen an, beispielsweise bei der Gasreinigung an einem Elektroofen oder einem Einschmelzvergaser. Da diese eisenhaltigen Stäube erfindungsgemäß zur Herstellung der Granulate verwendet werden, ist es von Vorteil, eine Eigenschaft dieser Stäube, nämlich ihre Magnetisierbarkeit, zu nutzen und dadurch das Filtrationsverhalten der Granulate positiv zu beeinflussen. Durch den Einsatz magnetisierter Granulate kann eisenhaltiger Zunder besonders wirksam aus den verunreingten Prozesswässern abgeschieden werden.

Die Herstellung der Granulate wird vorzugsweise so durchgeführt, daß der Korngrößenanteil der Granulate von 1 bis 8 mm, vorzugsweise 3 bis 6 mm, zumindest 90 % beträgt.

Gemäß einem vorteilhaften Merkmal des erfindungsgemäßen Verfahrens wird das mit Verunreinigungen beladene Filterhilfsmaterial einem Eisen- und/oder Stahlherstellungsprozeß zugeführt.

Sowohl die aus den Prozesswässern abgeschiedenen Verunreinigungen als auch die zur Herstellung der Granulate verwendeten Einsatzmaterialien können zur Deckung des Rohstoff- und Energiebedarfs eines Eisen- und/oder Stahlherstellungsprozesses beitragen. Auf diese Weise gelingt sowohl die Verwertung der in einem Hüttenwerk anfallenden Stäube und Feinstoffe, als auch eine verbesserte und kostengünstige Reinigung von Prozesswässern.

Um den Anforderungen des jeweiligen Eisen- und/oder Stahlherstellungsprozesses zu entsprechen, wird das mit Verunreinigungen beladene Filterhilfsmaterial vor seinem Einsatz im Eisen- und/oder Stahlherstellungsprozess pelletiert oder brikettiert.

Gemäß einer vorteilhaften Ausführungsform des erfindungsgemäßen Verfahrens werden die in der Grobabscheidung abgeschiedenen Öle und Fette dem beladenen Filterhilfsmaterial vor dessen Brikettierung oder Pelletierung zugesetzt.

Gemäß dieser Verfahrensführung gelingt es nicht nur, auf eine kostenintensive Entsorgung der Öle und Fette gänzlich zu verzichten, sondern auch, den Energieinhalt der Öle und Fette im Eisen- und Stahlherstellungsprozess zu verwerten. Dadurch können andere Energieträger eingespart werden.

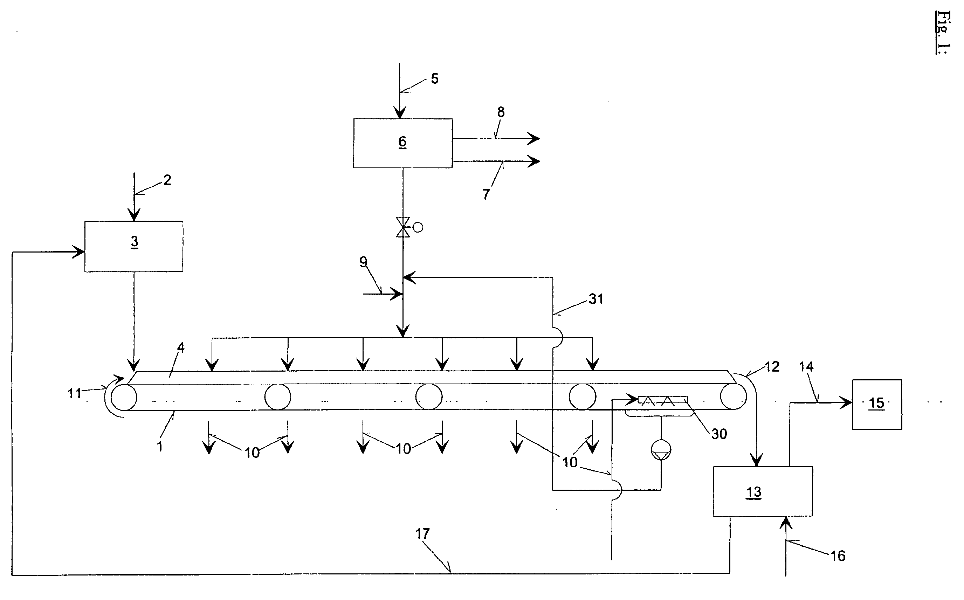

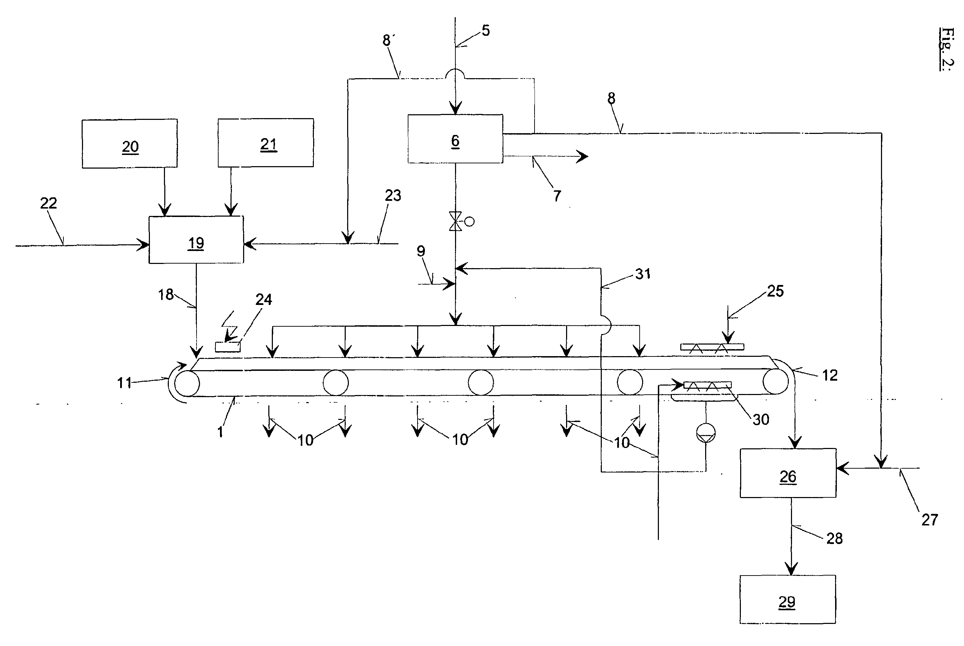

Im folgenden wird das erfindungsgemäße Verfahren anhand der in der Zeichnungen Fig. 1 und Fig. 2 dargestellten Ausführungsbeispiele näher erläutert.

Fig. 1: stellt dabei das erfindungsgemäße Verfahren unter Verwendung von Sand/Kies als Filterhilfsmaterial dar, Fig. 2 zeigt das erfindungsgemäße Verfahren unter Verwendung von granulierten Einsatzstoffen/Stäuben.

Bei der in Fig. 1 schematisch dargestellten Bandfilteranlage wird kontinuierlich Sand/Kies 2 aus einem Vorratsbehälter 3 auf ein endlos umlaufendes Band 1 als Filterhilfsmaterial aufgegeben. Das Filterhilfsmaterial bildet auf dem Band 1 eine Schicht 4 von etwa 10 cm Dicke. Die Maschenweite des Bandes 1 beträgt etwa 0,2 mm.

Verunreinigte Prozesswässer 5 werden in einem Zunderbrunnen 6 zunächst einer Grobabscheidung von Grobzunder 7, Ölen und Fetten 8 unterzogen und dann auf das Band 1 bzw. die Schicht 4 aus Filterhilfsmaterial aufgegeben. Vor der Aufgabe auf das Band 1 werden den Prozesswässern noch Flockungshilfsmittel 9 zugesetzt, um die anschließende Filtration zu erleichtern. Die Prozesswässer werden, wie in Fig. 1 dargestellt, über das Band 1 verteilt aufgegeben.

Die Prozesswässer durchsetzen hier die Schicht 4 aus Filterhilfsmaterial von oben nach unten. Dabei werden Verunreinigungen am Filterhilfsmaterial abgeschieden. Die gereinigten Prozesswässer 10 werden anschließend gesammelt und zu einem Kühlturm (nicht dargestellt) weitergeleitet.

Die Schicht 4 aus Filterhilfsmaterial wird in Pfeilrichtung 11 kontinuierlich weiterbewegt, am Bandende abgeworfen 12 und einer Rückspülvorrichtung 13 zugeführt, in welcher Sand/Kies und Zunder/Öl/Fett durch Spülen mit Luft und Wasser 16 voneinander getrennt werden. Das Zunder/Öl/Fett/Wasser-Gemisch 14 wird der Schlammaufbereitung 15 und der gereinige Sand/Kies 17 wieder dem Vorratsbehälter 3 zugeführt.

Das in Fig. 2 dargestellte Verfahren unterscheidet sich von dem in Fig. 1 gezeigten dadurch, daß hier ein Granulat 18 auf das Bandfilter 1 aufgegeben wird, wobei das Granulat 18 in einer Granulationsvorrichtung 19 aus Einsatzstoffen 20, wie Feinerz, Feinkohle oder staubförmigem Kalk, und Filterstäuben 21 unter Zusatz von Bindemitteln 22 und Hydrophobierungsmitteln 23 hergestellt wird. Ein Teil der im Zunderbrunnen bei der Grobabscheidung abgeschiedenen Öle/Fette 8' wird dabei als Hydrophobierungsmittel verwendet.

Unmittelbar nach der Aufgabe auf das Band 1 werden die Granulate magnetisiert 24. Bevor die Granulate vom Band 1 abgeworfen werden, werden sie mittels Druckluft 25 "trockengeblasen". Danach werden die Granulate vom Band 1 abgeworfen 12 und einer Pelletier- oder Brikettiereinrichtung 26 zugeführt, wo sie unter Zusatz von Bindemitteln 27, sowie des verbleibenden Teils 8 der im Zunderbrunnen abgetrennten Öle/Fette, pelletiert oder brikettiert werden.

Die gebildeten Pellets/Briketts 28 werden in einem Eisen- oder Stahlherstellungsprozess 29 eingesetzt.

In beiden Ausführungsbeispielen wird das Band 1 , nachdem das Filterhilfsmaterial abgeworfen wurde, von einer Bandspüleinrichtung 30 gereinigt, beispielsweise mittels gereinigtem Prozesswasser, und die dabei anfallenden Spülwässer 31 zusammen mit verunreinigten Prozesswässern wieder der Filtration zugeführt.

Das erfindungsgemäße Verfahren ermöglicht es, die in einem Stahlwerk mit einer Produktionskapazität von 280.000 jato in der Wasseraufbereitung anfallenden 1.400 jato Zunder und 28 jato Öl/Fett und die in der Entstaubungsanlage anfallenden 4200 jato EAF-Staub zur Gänze zu verwerten und wieder in den Stahlerzeugungsprozess einzusetzen. Darüberhinaus werden Deponieraum und Entsorgungskosten in der Größenordnung der anfallenden Abfallstoffe eingespart.

Die Erfindung beschränkt sich nicht auf die in den Zeichnungen Fig. 1 und Fig. 2 dargestellten Ausführungsbeispiele, sondern umfaßt auch alle dem Fachmann bekannten Mittel, die zur Ausführung der Erfindung herangezogen werden können.

## Patentansprüche

1. Verfahren zur Reinigung von verunreinigten Prozesswässern aus Anlagen zur Eisen- und/oder Stahlherstellung und -bearbeitung, beispielsweise aus Walzwerken oder Entzunderungsanlagen, wobei die Verunreinigungen von Zunder, Ölen, Fetten, sowie gegebenenfalls Ruß und/oder Staub gebildet werden, wobei die verunreinigten Prozesswässer zunächst in einer Grobabscheidung von Grobzunder und eines Teils der Öle/Fette gereinigt werden, anschließend in mindestens einer weiteren Reinigungsstufe endgereinigt und schließlich nach einem Kühlschritt wieder in den/die Eisen und/oder Stahl herstellenden bzw. bearbeitenden Prozess(e) zurückgeführt werden, **dadurch gekennzeichnet, daß** die verunreinigten Prozesswässer nach der Grobabscheidung einer Bandfiltration unterzogen werden und dabei eine Schicht aus feinkörnigem Filterhilfsmaterial durchströmen, wobei die Verunreinigungen abgeschieden werden und das Filterhilfsmaterial und/oder die darauf abgeschiedenen Verunreinigungen einer Weiterverwertung zugeführt werden, wobei das feinkörnige Filterhilfsmaterial a) zumindest teilweise von einem Granulat aus Einsatzstoffen für die Eisen- und/oder Stahlherstellung, insbesondere granuliertem Feineisenerz, granuliertem Kalk, granulierter Feinkohle oder granulierten Mischungen davon, und/oder b) zumindest teilweise von einem Granulat aus bei der Eisen- und/oder Stahlherstellung anfallenden Stäuben, insbesondere Staub wie er bei der Gasreinigung an Elektroöfen, Konvertern, Hochöfen, Einschmelzvergasern und Direktreduktionsöfen anfällt, gebildet wird.

2. Verfahren nach Anspruch 1**, dadurch gekennzeichnet, daß** feinkörniges Filterhilfsmaterial kontinuierlich auf ein Bandfilter aufgegeben wird und dabei eine Schicht mit einer Dicke von 5 bis 40 cm, vorzugsweise von 5 bis 20 cm, bildet und die verunreinigten Prozesswässer von oben auf das Filterhilfsmaterial aufgegeben werden.

3. Verfahren nach einem der Ansprüche 1 oder 2, **dadurch gekennzeichnet, daß** das mit Verunreinigungen beladene Filterhilfsmaterial - bevor es vom Bandfilter abgeworfen wird - mittels eines Gases, vorzugsweise Druckluft, getrocknet wird.

4. Verfahren nach einem der Ansprüche 1 bis 3**, dadurch gekennzeichnet, daß** das feinkörnige Filterhilfsmaterial zumindest teilweise von Sand und/oder Kies, gebildet wird.

5. Verfahren nach Anspruch 4, **dadurch gekennzeichnet, daß** der Korngrößenanteil des Sandes bzw. Kieses von 1 bis 8 mm, vorzugsweise von 3 bis 6 mm, zumindest 90 % beträgt.

6. Verfahren nach einem der Ansprüche 1 bis 5, **dadurch gekennzeichnet, daß** zur Herstellung der Granulate Bindemittel, beispielsweise Branntkalk, Aluminium-Silikate oder Zement, in ausreichender Menge zur Erzielung der für den Filtrationsprozeß erforderlichen Stabilität der Granulate zugesetzt wird.

7. Verfahren nach einem der Ansprüche 1 bis 6, **dadurch gekennzeichnet, daß** zur Herstellung der Granulate Hydrophobierungsmittel, beispielsweise Fettsäureverbindungen, insbesondere Fettsäureester, beispielsweise Stearate, oder in der Grobabscheidung abgeschiedene Öle und Fette, zugesetzt werden, um die Granulate wasserabweisend zu machen.

8. Verfahren nach einem der Ansprüche 1 bis 7, wobei zumindest ein Teil der Einsatzmaterialien zur Herstellung der Granulate von eisenhältigen Stäuben gebildet wird, **dadurch gekennzeichnet, daß** die Granulate - vor ihrem Einsatz als Filterhilfsmaterial - magnetisiert werden.

9. Verfahren nach einem der Ansprüche 1 bis 8, **dadurch gekennzeichnet, daß** der Korngrößenanteil der Granulate von 1 bis 8 mm, vorzugsweise 3 bis 6 mm, zumindest 90% beträgt.

10. Verfahren nach einem der Ansprüche 1 bis 9, **dadurch gekennzeichnet, daß** das mit Verunreinigungen beladene Filterhilfsmaterial als Einsatzstoff einem Eisen- und/oder Stahlherstellungsprozeß zugeführt wird.

11. Verfahren nach einem der Ansprüche 1 bis 10, **dadurch gekennzeichnet, daß** das mit Verunreinigungen beladene Filterhilfsmaterial vor seinem Einsatz im Eisen- und/oder Stahlherstellungsprozeß pelletiert oder brikettiert wird.

12. Verfahren nach einem der Ansprüche 1 bis 11, **dadurch gekennzeichnet, daß** die in der Grobabscheidung abgeschiedenen Öle/Fette dem beladenen Filterhilfsmaterial vor dessen Pelletierung oder Brikettierung zugesetzt werden.

13. Verfahren nach einem der Ansprüche 4 oder 5, **dadurch gekennzeichnet, daß** der mit den Verunreinigungen beladene Sand bzw. Kies vom Bandfilter abgeworfen, einer Regeneration unterzogen und als Filterhilfsmaterial in den Filtrationsprozeß rückgeführt wird.

## Claims

1. Method for the purification of impure effluents from plants for iron and/or steel production and processing, for example from rolling mills or descaling plants, the impurities being formed by scale, oils, greases and, where appropriate, soot and/or dust, the impure effluents first being purified in a coarse separation of coarse scale and of some of the oils/greases, subsequently being finally purified in at least one further purification stage, and finally, after a cooling step, being recirculated into the iron and/or steel production or processing process or processes, **characterized in that**, after coarse separation, the impure effluents are subjected to band filtration and in this case flow through a layer of fine-grained filter-aid material, the impurities being separated and the filter-aid material and/or the impurities separated on it being delivered for further utilization, the fine-grained filter-aid material being formed a) at least partially by a granulate consisting of substances used for iron and/or steel production, in particular granulated fine iron ore, granulated lime, granulated fine coal or granulated mixtures of these, and/or b) at least partially by a granulate consisting of dusts occurring in iron and/or steel production, in particular dust, such as occurs in gas purification on electric furnaces, converters, blast furnaces, smelting gasifiers and direct reduction furnaces.

2. Method according to Claim 1, **characterized in that** fine-grained filter-aid material is fed continuously onto a band filter and in this case a layer with a thickness of 5 to 40 cm, preferably of 5 to 20 cm, is formed, and the impure effluents are fed onto the filter-aid material from above.

3. Method according to either one of Claims 1 and 2, **characterized in that** the filter-aid material laden with impurities is dried by means of a gas, preferably compressed air, before it is discarded from the band filter.

4. Method according to one of Claims 1 to 3, **characterized in that** the fine-grained filter-aid material is formed at least partially by sand and/or gravel.

5. Method according to Claim 4, **characterized in that** the grain size fraction of the sand or gravel of 1 to 8 mm, preferably of 3 to 6 mm, amounts to at least 90%.

6. Method according to one of Claims 1 to 5, **characterized in that**, to produce the granulates, binder, for example quicklime, aluminium silicates or cement, is added in a sufficient quantity to achieve the stability of the granulates which is required for the filtration process.

7. Method according to one of Claims 1 to 6, **characterized in that**, to produce the granulates, hydrophobic agents, for example fatty acid compounds, in particular fatty acid esters, for example stearates, or oils and greases separated in the coarse separation are added, in order to make the granulates water-repellent.

8. Method according to one of Claims 1 to 7, at least some of the materials used for producing the granulates being formed by ferruginous dusts, **characterized in that** the granulates are magnetized before being used as filter-aid material.

9. Method according to one of Claims 1 to 8, **characterized in that** the grain size fraction of the granulates of 1 to 8 mm, preferably 3 to 6 mm, amounts to at least 90%.

10. Method according to one of Claims 1 to 9, **characterized in that** the filter-aid material laden with impurities is delivered as usable substance to an iron and/or steel production process.

11. Method according to one of Claims 1 to 10, **characterized in that** the filter-aid material laden with impurities is pelletized or briquetted before being used in the iron and/or steel production process.

12. Method according to one of Claims 1 to 11, **characterized in that** the oils/greases separated in the coarse separation are added to the laden filter-aid material before the palletizing or briquetting of the latter.

13. Method according to either one of Claims 4 and 5, **characterized in that** the sand or gravel laden with the impurities is discarded from the band filter, subjected to regeneration and recirculated as filter-aid material into the filtration process.

## Revendications

1. Procédé d'épuration d'eaux polluées de traitement qui proviennent d'installations de fabrication ou de traitement de fonte et/ou d'acier, par exemple de laminoirs ou d'installations de décapage, dans lesquelles des impuretés de décapage, huiles, graisses ainsi qu'éventuellement des suies et/ou des poussières sont produites, les eaux de traitement polluées étant d'abord épurées par une séparation grossière des déchets grossiers de décapage et d'une partie des huiles et/ou graisses et subissant ensuite une épuration finale dans au moins une autre étape d'épuration pour être enfin renvoyées après une étape de refroidissement dans le ou les procédés de fabrication ou de traitement de fonte et/ou d'acier, **caractérisé en ce qu'**après la séparation grossière les eaux polluées de traitement subissent une filtration sur bande et traversent à cette occasion une couche d'un matériau auxiliaire de filtration en grains fins sur lequel les impuretés sont déposées, le matériau auxiliaire de filtration et/ou les impuretés qui s'y sont déposées étant envoyés dans un traitement de recyclage, le matériau auxiliaire de filtration a) en grains fins étant formé au moins en partie d'un granulé de substances utilisées pour la fabrication de la fonte et/ou de l'acier, en particulier du minerai de fer en fines granulées, de la chaux granulée, des fines de charbons granulées ou des mélanges granulés de ces substances et/ou b) formé au moins en partie d'un granulé de poussières produites lors de la fabrication de fonte et/ou d'acier, en particulier la poussière déposée lors de l'épuration des gaz de fours électriques, de convertisseurs, de hauts-fourneaux, de gazéificateurs de fusion ou de fours à réduction directe.

2. Procédé selon la revendication 1, **caractérisé en ce que** le matériau auxiliaire de filtration en grains fins est délivré en continu sur un filtre à bande de manière à y former une couche d'une épaisseur de 5 à 40 cm et de préférence de 5 à 20 cm, les eaux polluées de traitement étant délivrées par le haut sur le matériau auxiliaire de filtration.

3. Procédé selon l'une des revendications 1 ou 2, **caractérisé en ce qu'**avant d'être enlevé du filtre à bande, le matériau auxiliaire de filtration chargé en impuretés est séché à l'aide d'un gaz, de préférence de l'air comprimé.

4. Procédé selon l'une des revendications 1 à 3, **caractérisé en ce que** le matériau auxiliaire de filtration en grains fins est formé au moins en partie de sable et/ou de gravier.

5. Procédé selon la revendication 4, **caractérisé en ce que** la distribution granulométrique du sable ou du gravier est à au moins 90 % comprise entre 1 et 8 mm et de préférence de 3 à 6 mm.

6. Procédé selon l'une des revendications 1 à 5, **caractérisé en ce que** pour préparer les granulés, on ajoute des liants, en particulier de la chaux vive, des silicates d'aluminium ou du ciment, en quantité suffisante pour obtenir des granulés qui présentent la stabilité nécessaire pour l'opération de filtration.

7. Procédé selon l'une des revendications 1 à 6, **caractérisé en ce que** pour préparer les granulés, on ajoute des agents hydrophobes, par exemple des composés d'acide gras et en particulier des esters d'acide gras, par exemple des stéarates, ou des huiles ou graisses qui se sont déposées lors de la séparation grossière, pour rendre les granulés hydrophobes.

8. Procédé selon l'une des revendications 1 à 7, dans lequel au moins une partie de matériau utilisé pour la préparation des granulés est formée de poussières qui contiennent du fer, **caractérisé en ce qu'**avant leur utilisation comme matériau auxiliaire de filtration, les granulés sont magnétisés.

9. Procédé selon l'une des revendications 1 à 8, **caractérisé en ce que** la distribution granulométrique des granulés est au moins à 90% de 1 à 8 mm et de préférence de 3 à 6 mm.

10. Procédé selon l'une des revendications 1 à 9, **caractérisé en ce que** le matériau auxiliaire de filtration chargé en impuretés est envoyé comme matière première dans une opération de fabrication de fonte et/ou d'acier.

11. Procédé selon l'une des revendications 1 à 10, **caractérisé en ce que** le matériau auxiliaire de filtration chargé en impuretés est pelletisé ou briqueté avant d'être utilisé dans l'opération de fabrication de fonte et/ou d'acier.

12. Procédé selon l'une des revendications 1 à 11, **caractérisé en ce que** les huiles et/ou les graisses qui se sont déposées lors de la séparation grossière sont ajoutées au matériau auxiliaire de filtration chargé avant de pelletiser ou de briqueter ce matériau.

13. Procédé selon l'une des revendications 4 ou 5, **caractérisé en ce que** le sable ou gravier chargé d'impuretés est enlevé du filtre à bande, subit une régénération et est renvoyé comme matériau auxiliaire de filtration dans l'opération de filtration.
